# EUROPEAN PATENT SPECIFICATION

(11) **EP 0 908 418 B1**
(45) Date of publication and mention of the grant of the patent: **05.04.2006**
(21) Application number: 98119055.6
(22) Date of filing: 08.10.1998
(51) Int. Cl.: C03B 19/14

(54) **Manufacturing method of synthetic silica glass**
Verfahren zur Herstellung von synthetischem Quarzglas
Procédé de fabrication de verre de silice synthétique

(30) Priority: 09.10.1997 JP 27702197
(43) Date of publication of application: 14.04.1999
(73) Proprietor: NIKON CORPORATION, Tokyo (JP)
(72) Inventor: Fujiwara, Seishi Nikon Corpo.(Intell. Prop. Head.), Tokyo (JP); Komine, Norio Nikon Corpo. (Intellec. Prop. Head.), Tokyo (JP); Jinbo, Hiroki Nikon Corpo.(Intellect. Prop. Head.), Tokyo (JP)
(74) Representative: Viering, Jentschura & Partner

(56) References cited:
- EP-A- 0 058 571
- EP-A- 0 635 460
- WO-A-97/22553
- GB-A- 2 015 991
- US-A- 4 529 427
- PATENT ABSTRACTS OF JAPAN vol. 16, no. 369 (C-972), 10 August 1992 & JP 04 119928 A (FURUKAWA ELECTRIC CO. LTD.), 21 April 1992

## Description

### BACKGROUND OF THE INVENTION

### Field of the Invention

The present invention relates to a method of manufacturing synthetic silica glass with the preamble according to independent claim 1.

### Discussion of the Related Art

Currently, steppers are being used for photolithography to expose and transcribe very small integrated circuit patterns on, for example, semiconductor substrates during the manufacturing process of semiconductor devices. Recently, due to a higher integration of Large Scale Integrated Circuits (LSI), ultraviolet light, which has shorter wavelengths than visible light, has been used in the stepper's light source. Therefore, an optical system of an exposure apparatus must include components that transmit light in the ultraviolet range, since conventional optical glass is impractical to use in such applications. One known example of an optical material with a high transmittance in the ultraviolet range is silica glass.

In addition, the optical system of the exposure apparatus includes multiple optical members, such as lenses, which are used for adjusting for aberrations. Therefore, in order to have a high transmittance for the entire optical system of the exposure apparatus, each individual optical member must have a high transmittance. In order to increase the transmittance of silica glass, the silica glass must have a high purity. One known manufacturing method by which high purity silica glass can be obtained is a flame hydrolysis method (sometimes called a "direct method" or a "direct flame hydrolysis method").

For the flame hydrolysis method, a silicon compound with high purity, such as, silicon tetrachloride (SiCl₄) is used. This compound, along with a combustion gas and a combustible gas (such as oxygen and hydrogen), which are used for heating and for the hydrolysis reaction, are expelled from a burner toward a target in a synthesis furnace. The target is rotated and lowered in the synthesis furnace. The starting material expelled from the burner is hydrolyzed by the oxygen/hydrogen flame and forms minute silica glass particles (soot). The soot is deposited, fused, becomes transparent, and forms an ingot of silica glass. The silica glass thus obtained is called synthetic silica glass.

The higher the chlorine concentration in the synthetic silica glass, the lower the durability to ultraviolet radiation of the synthetic silica glass. Therefore, in order to lower the chlorine concentration in the synthetic silica glass, it is preferable to use chloride-free silicon compounds.

When silicon chloride compounds are used, hydrogen chloride, which is a corrosive gas, is generated in the synthesis furnace. To avoid generating hydrogen chloride, it is preferable to use silicon compounds, which are not chlorides, as a starting material for synthetic silica glass.

An example of a technology for using chloride-free organic silicon compounds as a starting material for synthetic silica glass is disclosed in "Tokukaihei" (publication of unexamined patent application) Heisei 4-270130 (1992) (corresponding to U.S. Patent No. 5,043,002).

From EP 0,058,571, a method of delivering reactant at controlled flow rate to a reaction zone for a vapour phase deposition reaction is known. A flow of liquid reactant is produced at a controlled rate, the liquid is evaporated and is supplied into the reaction zone for the vapour phase deposition reaction.

In EP 0,635,460, an apparatus for producing a glass formation gas is disclosed comprising a tank for containing liquid material, a vaporizer for vaporizing this material and a liquid flow rate control means for controlling the flow of the liquid material. Fine glass particles are produced by injecting and hydrolyzing vaporized material in a burner.

GB 2,015,991 discloses a system for depositing a siliceous reaction product upon a substrate. The flow of liquids from a tanks to a reaction chamber is controlled by a flow controller. The liquids are mixed and nebulized before being directed to discharge means.

From WO 97/22553, a method and an apparatus for forming fused silica by combustion of liquid reactants is known. A liquid is directed into the flame of a burner thereby forming amorphous soot deposited on a surface. The soot is then consolidated into a body of fused silica glass.

Compared to the boiling point of SiCl₄, which is 58°C to 59°C, the boiling point of many organic silicon compounds is 100°C or more, due to their high molecular weight. However, heat resistance of even the heat-resistant versions of commercial mass flow meters used for gases, is, at most, only 80°C. Therefore, it has been difficult to control the amount of the gaseous organic silicon compound introduced into the synthesis furnace.

Therefore, there is a need for a manufacturing method for synthetic silica glass that can control the amount of a silicon compound having a high boiling point when introduced to the synthesis furnace.

### SUMMARY OF THE INVENTION

Accordingly, the present invention is directed to a method of manufacturing of synthetic silica glass that substantially obviates one or more of the problems due to limitations and disadvantages of the related art.

An object of the present invention is to provide a better controlled method of manufacturing of synthetic silica glass.

Additional features and advantages of the invention will be set forth in the description which, follows; and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, there is provided a method of manufacturing synthetic silica glass with the features according to independent claim 1.

A method may include the steps of introducing a liquid silicon compound into a vaporization equipment, wherein an amount of the liquid silicon compound is controlled with a liquid mass flow meter, converting the liquid silicon compound into a gaseous silicon compound, and supplying the gaseous silicon compound into a synthesis furnace to form synthetic silica glass. The step of supplying the gaseous silicon compound into a synthesis furnace includes heating the gaseous silicon compound to a temperature that is at least 10°C higher than a boiling point of the silicon compound.

Preferably, the method of the present invention includes the further steps of manufacturing synthetic silica glass including the steps of pressurizing a liquid storage tank including a liquid silicon compound therein, displacing the liquid silicon compound into a vaporization equipment while controlling an amount of the liquid silicon compound displaced by a liquid mass flow meter, mixing the liquid silicon compound with a carrier gas to generate a gaseous silicon compound, injecting the gaseous silicon compound into a synthesis furnace, and forming synthetic silica glass by hydrolyzing the gaseous silicon compound in the synthesis furnace.

It is to be understood that both the foregoing general description and the following detailed description are exemplary and explanatory and are intended to provide further explanation of the invention as claimed.

### BRIEF DESCRIPTION OF THE ATTACHED DRAWINGS

The accompanying drawing, which is included to provide a further understanding of the invention and is incorporated in and constitutes a part of this specification, illustrates an embodiment of the invention and together with the description serves to explain the principles of the invention.

In the drawing:

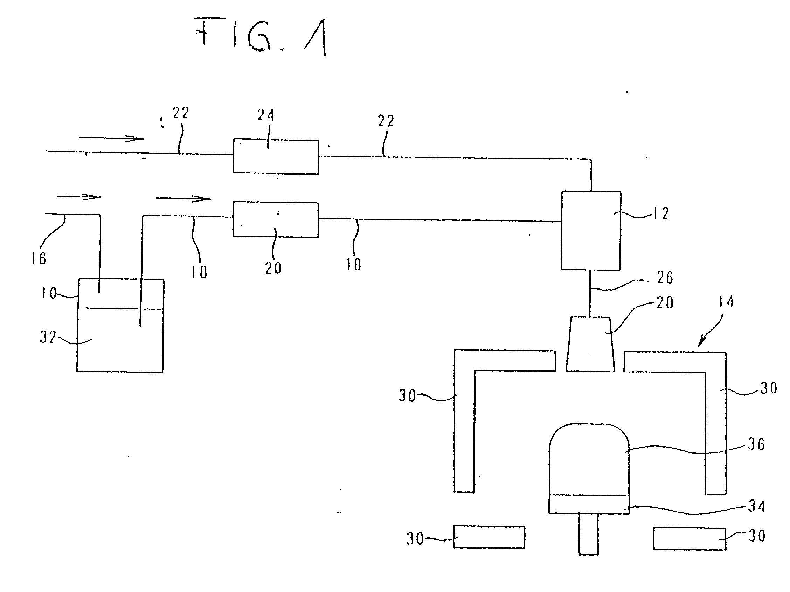

FIG. 1 is a block diagram that illustrates the structure of the synthetic silica glass manufacturing apparatus used in a preferred embodiment of the present invention.

### DETAILED DESCRIPTION OF THE PREFERRED EMBODIMENTS

Reference will now be made in detail to a preferred embodiment of the present invention, an example of which is illustrated in the accompanying drawing.

The inventors of the present invention have conducted various experiments, and as a result, have considered controlling the flow amount of a silicon compound having a high boiling point by controlling it at a temperature below its boiling point, while it is in a liquid state.

As described above, the temperature of the liquid silicon compound (such as for an organic silicon compound) should be lower than its boiling point. Therefore, the flow amount of the liquid silicon compound can be controlled by a liquid mass flow meter. Accordingly, by controlling the amount of liquid silicon compound introduced into the vaporization equipment, it is possible to indirectly control the amount of gaseous silicon compound introduced into the synthesis furnace.

In addition, when impurities (such as hydrocarbons) are mixed in the liquid silicon compound in the vaporization equipment, the impurities with a boiling point that is higher than the silicon compound are not vaporized. The non-vaporized impurities are left in the vaporization equipment. Therefore, it is possible to separate the impurities from the gaseous silicon compound (vapor) in the vaporization equipment.

According to the manufacturing method of synthetic silica glass of the present invention, it is preferable to generate the gaseous silicon compound by mixing the liquid silicon compound in a mist or aerosol state with a carrier gas and heating them in the vaporization equipment.

As described above, when the liquid silicon compound is mixed with a carrier gas after being placed in a mist state (minute particles), it is possible for the liquid silicon compound to effectively receive the kinetic energy of the carrier gas. Therefore, it is possible to uniformly diffuse the liquid silicon compound in the mist state in the vaporization equipment and, as a result, it is possible to effectively vaporize the liquid silicon compound.

When the temperature of the gaseous silicon compound is near the boiling point of the silicon compound, there is the possibility that the gaseous silicon compound re-liquidizes before it is introduced into the synthesis furnace.

According to the manufacturing method of synthetic silica glass of the present invention, the gaseous silicon compound is heated in the vaporization equipment to a temperature that is 10°C or more than a boiling point of the silicon compound. By setting the temperature of the gaseous silicon compound at 10°C or higher than the boiling point of the silicon compound, it is possible to reduce the risk of re-liquidization of the gaseous silicon compound.

When the boiling point of the silicon compound is low for example less than 50°C, it is difficult to handle because it is easily vaporized. On the other hand, when the boiling point of the silicon compound is, for example, greater than 140°C, there is a high risk that the temperature of the gaseous silicon compound will drop below the boiling point in the pipe that introduces the gaseous silicon compound into the synthesis furnace. As a result, a high risk exists that the gaseous silicon compound will re-liquidize.

The silicon compound used in the present invention has a boiling point in the range of 99°C to 140°C.

The silicon compound used is selected form the group consisting of alkoxysilane, alkylcyclosiloxane, or alkylsiloxane.

The structure of the synthetic silica glass manufacturing apparatus used in the manufacturing method of synthetic silica glass of the present invention will be described with reference to FIG. 1. FIG. 1 is a block diagram that illustrates the synthetic silica glass manufacturing apparatus used in the manufacturing method of synthetic silica glass of the preferred embodiment.

In FIG. 1, except for the gas supply structure (such as pipes), any structural illustrations, such as those for supplying a combustion gas (such as oxygen) and a combustible gas (such as hydrogen), are omitted.

The synthetic silica glass manufacturing apparatus includes a liquid material cylinder 10 (a liquid storage tank), a vaporization equipment 12, and a synthesis furnace 14. A pressurizing gas pipe 16 is connected to liquid material cylinder 10. The liquid material cylinder 10 and the vaporization equipment 12 are connected by a liquid material pipe 18. In the middle of the liquid material pipe 18 is a liquid mass flow meter 20. For example, the LX-1200 meter manufactured by AERA JAPAN LTD. may be used as the liquid mass flow meter 20.

A carrier gas pipe 22 is connected to the vaporization equipment 12. In addition, a gas mass flow meter 24 is provided in the carrier gas pipe 22.

The vaporization equipment 12 and the synthesis furnace 14 are connected by a gas material pipe 26. The gas material pipe 26 is connected to a burner 28 of the synthesis furnace 14. The synthesis furnace 14 is surrounded with refractory material 30.

In the present invention, a pressurizing gas is sent through the pressurizing gas pipe into the liquid material cylinder 10 where a liquid silicon compound 32 is stored. The liquid silicon compound 32 is a liquid organic silicon compound of boiling point in the range from 99° C to 140 °C.

It is desirable to use a pressurizing gas that is difficult to dissolve in the liquid silicon compound 32. For example, helium may be used as the pressurizing gas. When the pressurizing gas is sent to the liquid material cylinder 10, the liquid silicon compound 32 is displaced from the liquid material cylinder 10. The displaced liquid silicon compound 32 is thus supplied to the vaporization equipment 12 through the liquid mass flow meter 20 and the liquid material pipe 18.

The amount of liquid silicon compound 32 introduced to the vaporization equipment 12 is controlled with the liquid mass flow meter 20. The liquid silicon compound 32 is approximately at room temperature, which is lower than its boiling point, so that it is possible to control it sufficiently using a conventional liquid mass flow meter.

Next, in the present invention, a gaseous silicon compound is generated by vaporizing the liquid silicon compound 32 in the vaporization equipment 12. The gaseous silicon compound is generated by mixing the liquid silicon compound 32 in a mist state with a carrier gas, and heating both. An inert gas (such as helium gas) is preferable for the carrier gas. Another option includes using nitrogen gas as the carrier gas. The pressurizing gas type need not be consistent with the carrier gas type. It is preferable for the carrier gas to be supplied at approximately 1.5 to 2.0 SLM (standard liters per minute). The amount of the carrier gas is controlled with the gas mass flow meter 24.

In the vaporization equipment 12, the gaseous silicon compound is heated to a temperature greater than the boiling point of the organic silicon compound by 10°C or more. It is preferable, for example, to use a rubber heater to do this. A high-frequency inductive coil can also be used for the heating.

Next, the gaseous silicon compound is introduced into the synthesis furnace 14. The gaseous silicon compound created in the vaporization equipment 12 is supplied to the burner 28 along with the carrier gas. The gaseous silicon compound supplied to the burner 28 is expelled from the burner 28 towards an ingot 36 of synthetic silica glass formed on a target 34 inside the synthesis furnace 14.

Next, experimental examples 1 to 4, which are examples of manufacturing synthetic silica glass using various organic silicon compounds as starting materials, are described.

During the manufacturing of synthetic silica glass, for each example, oxygen gas O₂ (the combustion gas) and hydrogen gas H₂ (the combustible gas) are expelled from each nozzle of the burner 28 at a flow speed of 2.6 to 50 m/s. The flow amounts of the gases differ depending on the nozzles. The ratio of the flows for oxygen gas/hydrogen gas is 0.35 for the entire burner 28.

The gaseous silicon compound expelled from the burner 28 forms a soot. The soot is deposited on the synthesis surface of the ingot 36 formed of synthetic silica glass. During the synthesis of the silica glass, in order to have a uniform temperature on the synthesis surface of the ingot 36, the target 34 loaded with the ingot 36 is rotated and rocked at set intervals. In order to maintain a set distance between the synthesis surface of the ingot 36 and the edge of the burner 28, the target 34 is slowly Iowered. Thus, an ingot of synthetic silica glass with a diameter of 240 mm and a length of 600 mm is obtained.

### Experimental example 1

In the experimental example 1, tetramethoxysilane (TMOS), a type of alkoxysilane, was used. The boiling point of TMOS is 132°C. The amount of liquid TMOS supplied from the liquid material cylinder 10 to the vaporization equipment 12 was controlled with a liquid mass flow meter 20. In the experimental example 1, the amount of liquid TMOS supplied was controlled at a rate of 5 g/min. This is equivalent to, for example, the flow amount at 5 to 6 g/min. of silicon tetrachloride (SiCl₄).

In the vaporization equipment 12, the liquid TMOS introduced into the vaporization equipment 12 was heated to 150°C, which is 18°C higher than its boiling point. Then, vaporized TMOS was supplied to the synthesis furnace 14.

When the ingot 36 manufactured in the experimental example 1 was observed by a naked eye, there were no bubbles observed in the ingot 36. The utilization rate of this ingot 36 manufactured according to the experimental example 1 was 65%. The higher the utilization rate, the better the vaporization of the material introduced into the synthesis furnace. The utilization rate is given as the proportion of the mass of the ingot 36 to the mass of the introduced material that is converted to SiO₂.

The amount of carbon (an impurity) in the ingot 36 manufactured according to the experimental example 1 was measured using a well-known method of combustion analysis. The carbon content (i.e., concentration of remaining carbon) was less than 10 ppm, which is below the limit of detection.

The ingot's transmittance of ultraviolet light at a wavelength of 193 nm was greater than 99.9%cm. Therefore, the ingot 36 may be used to manufacture optical components for use in the ultraviolet region.

### Experimental example 2

In the experimental example 2, hexamethyldisiloxane (HMDS), which is a type of alkylsiloxane, was used as the material. The boiling point of the HMDS is 99°C. The amount of liquid HMDS supplied from the liquid material cylinder 10 to the vaporization equipment 12 was controlled with a liquid mass flow meter 20. In the experimental example 2, the amount of liquid HMDS supplied was controlled at a rate of 5 g/min.

In the vaporization equipment 12, the liquid HMDS introduced into the vaporization equipment 12 was heated to 115 °C, which is 16°C higher than its boiling point. Then, vaporized HMDS was supplied to the synthesis furnace 14.

When the ingot 36 manufactured in the experimental example 2 was observed by a naked eye, there were no bubbles observed in the ingot 36. The utilization rate of this ingot 36 was 75%. The carbon content of the ingot 36 was less than 10 ppm, which is below the limit of detection. The ingot's transmittance of ultraviolet light at a wavelength of 193 nm was greater than 99.9%/cm. Therefore, the ingot 36 may be used to manufacture optical components for use in the ultraviolet region.

A disiloxane, such as hexamethyldisiloxane, contains 2 atoms of silicon (Si) per molecule. Therefore, it is appropriate as the material for synthetic silica glass.

### Experimental example 3

Next, in the experimental example 3, methyltrimethoxysilane (MTMS), which is a type of alkoxysilane, was used as a starting material. The boiling point of MTMS is 103 °C. The amount of liquid MTMS supplied from the liquid material cylinder 10 to the vaporization equipment 12 was controlled with a liquid mass flow meter 20. In the experimental example 3, the amount of liquid MTMS supplied was controlled at a rate of 5 g/min.

In the vaporization equipment 12, the liquid MTMS introduced into the vaporization equipment 12 was heated to 115°C, which is 12°C higher than its boiling point. Then, the vaporized MTMS was supplied to the synthesis furnace 14.

When the ingot 36 manufactured in the experimental example 3 was observed by a naked eye, there were no bubbles observed in the ingot 36. The utilization rate of this ingot 36 was 70%. The carbon content of the ingot 36 was less than 10 ppm, which is below the limit of detection. The ingot's transmittance of ultraviolet light at a wavelength of 193 nm was greater than 99.9%/cm. Therefore, the ingot 36 may be used to manufacture optical components for use in the ultraviolet region.

### Experimental example 4

2, 4, 6, 8, -tetramethylcyclotetrasiloxane (TMCTS), which is a type of alkylcyclosiloxane, was used as the material in the experimental example 4. The boiling point of TMCTS is 135°C. The amount of liquid TMCTS supplied from the liquid material cylinder 10 to the vaporization equipment 12 was controlled with a liquid mass flow meter 20. In the experimental example 4, the amount of liquid TMCTS was controlled at a rate of 5 g/min.

In the vaporization equipment 12, the liquid TMCTS introduced into the vaporization equipment 12 was heated to 145°C, which is 10°C higher than its boiling point. Then, vaporized TMCTS was supplied to the synthesis furnace 14.

When the ingot 36 manufactured in the experimental example 4 was observed by a naked eye, there were no bubbles observed in the ingot 36. The utilization rate of this ingot 36 was 65%. The carbon content of the ingot 36 was less than 10 ppm which is below the limit of detection. The ingot's transmittance of ultraviolet light at a wavelength of 193 nm was greater than 99.9%/cm. Therefore, the ingot 36 may be used to manufacture optical components for use in the ultraviolet region.

Next, comparative examples are described. In the comparative examples, with the exception of the kinds of materials used and the heating temperature, the synthetic silica glass was manufactured using the equipment shown in FIG. 1.

### Comparative Example 1

In the comparative example 1, hexamethyldisiloxane (HMDS), which is a type of alkylsiloxane, was used. The boiling point of HMDS is 99°C. The amount of liquid HMDS supplied from the liquid material cylinder 10 to the vaporization equipment 12 was controlled with a liquid mass flow meter 20. In the comparative example 1, the amount of liquid HMDS was controlled at a rate of 5 g/min.

For the comparative example 1, in the vaporization equipment 12, the liquid HMDS introduced in the vaporization equipment 12 was heated to 100°C, which is approximately the same as its boiling point. Then, vaporized HMDS was supplied to the synthesis furnace 14.

When the ingot 36 manufactured in the experimental example 4 was observed by a naked eye, there were many bubbles observed in the ingot 36. The utilization rate of this ingot 36 was 5%. From the utilization rate, it is assumed that the gaseous silicon compound supplied to the synthesis furnace was re-liquidized in the gas material pipe 26 due to the low heating temperature.

The amount of carbon in the ingot 36 manufactured in the comparative example 1 was measured using a well-known method of combustion analysis. The carbon content was approximately 500 ppm.

The ingot's transmittance of ultraviolet light with a wavelength of 193 nm was measured. The transmittance was 98.5%cm. It is assumed that the transmittance was low due to the high concentration of the remaining carbon impurities.

### Comparative Example 2

Next, in the comparative example 2, tetraethoxysilane (TEOS), which is a type of alkoxysilane, was used as the material. The boiling point of TEOS is 168°C. The amount of liquid TEOS supplied from the liquid material cylinder 10 to the vaporization equipment 12 was controlled with a liquid mass flow meter 20. In the comparative example 2, the amount of liquid TEOS was controlled at a rate of 5 g/min.

Then, in the vaporization equipment 12, the liquid TEOS introduced in the vaporization equipment 12 was heated to 180°C, which is 12°C higher than its boiling point. Then, vaporized TEOS was supplied to the synthesis furnace 14.

When the ingot 36 manufactured in the comparative example 2 was observed by a naked eye, there were many bubbles observed in the ingot 36. The utilization rate of this ingot 36 was 5%. From the utilization rate, it is assumed that the gaseous silicon compound supplied to the synthesis furnace was re-liquidized in the gas material pipe 26 due to its high boiling point The amount of carbon in the ingot 36 was measured using a well-known method of combustion analysis. The carbon content was approximately 1000 ppm.

The transmittance of ultraviolet light with a wavelength of 193 nm was measured for the ingot 36. The transmittance was 97.5%/cm. It is assumed that the transmittance was low due to the high concentration of the remaining carbon impurities.

Table 1 shows the measurement results of the above-mentioned Experimental Examples 1 to 4 and Comparative Examples 1 and 2.

**Table 1**

| | material | flow amount of material (g/min.) | vaporization temperature (°C) | bubble | scavenger rate (%) | carbon content (ppm) | 193 nm transmittance (%/cm) |
|---|---|---|---|---|---|---|---|
| experimental example 1 | TMOS | 5.0 | 150 | none | 65 | <10 | >99.9 |
| experimental example 2 | HMDS | 5.0 | 115 | none | 75 | <10 | >99.9 |
| experimental example 3 | MTMS | 5.0 | 115 | none | 70 | < 10 | >99.9 |
| experimental example 4 | TMCTS | 5.0 | 145 | none | 65 | <10 | >99.9 |
| comparative example 1 | HMDS | 5.0 | 100 | many | 5 | 500 | 98.5 |
| comparative example 2 | TEOS | 5.0 | 180 | many | 5 | 1000 | 97.5 |

Although only specific materials and conditions were described, the present invention can be used with many changes and in many forms. For example, in the above examples, the liquid silicon compound was mixed with a carrier gas after it was placed in a mist state; however, it is possible to mix the liquid silicon compound with the carrier gas before the liquid silicon compound reaches a mist state.

Thus, in the present invention, by controlling the amount of the liquid silicon compound introduced into the vaporization equipment using a liquid mass flow meter, it is possible to indirectly control the amount of the gaseous silicon compound introduced into the synthesis furnace.

## Claims

1. A method of manufacturing synthetic silica glass comprising the steps of:
introducing a liquid silicon compound (32) into a vaporization equipment (12), wherein an amount of the liquid silicon compound (32) is controlled with a liquid mass flow meter (20);
converting the liquid silicon compound into a gaseous silicon compound; and
supplying the gaseous silicon compoun into a synthesis furnace (14) to form synthetic silica glass;wherein the step of supplying the gaseous silicon compound into a synthesis furnace (14) includes heating the gaseous silicon compound to a temperature that is at least 10°C higher than a boiling point of the silicon compound;
**characterized in that**
the step of introducing a liquid silicon compound into a vaporization equipment (12) includes using a silicon compound (32) with a boiling point in a range of 99°C to 140°C, the silicon compound being a compound selected from the group consisting of alkoxysilane, alkylcyclosiloxane and alkylsiloxane.

2. The method of claim 1, wherein the step of converting the liquid into a gaseous silicon compound includes mixing the liquid in a mist state with a carrier gas and heating the liquid and the carrier gas in the vaporization equipment (12) to form the gaseous silicon compound.

3. The method of claim 1, wherein the step of converting the liquid (32) into a gaseous silicon compound includes mixing the liquid in a mist state with a carrier gas.

4. The method of claim 1, wherein the step of converting the liquid into a gaseous silicon compound includes mixing the liquid in a mist state with a carrier gas and controlling an amount of the carrier gas with a gas mass flow meter (24).

5. The method of claim 1, further comprising the steps of:
pressurizing a liquid storage tank (10) including a liquid silicon compound therein;
displacing the liquid silicon compound (32) into a vaporization equipment (12) while controlling an amount of the liquid silicon compound displaced by a liquid mass flow meters (20);
mixing the displaced liquid silicon compound with a carrier gas to generate a gaseous silicon compound;
injecting the gaseous silicon compound into a synthesis furnace (14); and
forming synthetic silica glass by hydrolyzing the gaseous silicon compound in the synthesis furnace (14).

6. The method of claim 5, wherein a jet of gaseous silicon compound is directed towards a target (34).

7. The method of claim 6, wherein an ingot (36) is formed at the target (34).

8. The method of claim 7, wherein the target (34) is gradually lowered while the ingot (36) is being formed.

9. The method of claim 5, wherein the step of mixing the displaced liquid gaseous silicon compound (32) includes mixing the liquid in a mist state with a carrier gas and heating the liquid and the carrier gas in the vaporization equipment (12) to form the gaseous silicon compound.

10. The method of claim 5, wherein the step of injecting the gaseous silicon compound into a synthesis furnace (14) includes heating the gaseous silicon compound to a temperature that is at least 10°C higher than a boiling point of the silicon compound.

11. The method of claim 5, wherein the step of displacing the liquid silicon compound (32) into a vaporization equipment (12) includes using a silicon compound with a boiling point in a range of 99°C to 140°C.

12. The method of claim 5, wherein the step of displacing the liquid silicon compound (32) into a vaporization equipment (12) includes using as silicon compound a compound selected from the group consisting of alkoxysilane, alkylcyclosiloxane and alkylsiloxane.

13. The method of claim 5, wherein the step of mixing the liquid silicon compound (32) with a carrier gas to generate a gaseous silicon compound includes mixing the liquid silicon compound in a mist state with a carrier gas.

14. The method of claim 5, wherein the step of mixing the liquid silicon compound (32) with a carrier gas to generate a gaseous silicon compound includes mixing the liquid silicon compound in a mist state with a carrier gas and controlling an amount of the carrier gas with a gas mass flow meter (24).

## Revendications

1. Procédé de fabrication de verre de silice synthétique comprenant les étapes consistant à :
introduire un composé de silicium liquide (32) dans un équipement de vaporisation (12), dans lequel une quantité du composé de silicium liquide (32) est contrôlée par un débitmètre massique pour liquide (20) ;
convertir le composé de silicium liquide en un composé de silicium gazeux ; et
alimenter le composé de silicium gazeux dans un four de synthèse (14) pour former un verre de silice synthétique ; dans lequel l'étape consistant à alimenter le composé de silicium gazeux dans un four de synthèse (14) comprend le chauffage du composé de silicium gazeux à une température qui est supérieure d'au moins 10°C à un point d'ébullition du composé de silicium ;
**caractérisé en ce que**
l'étape consistant à introduire un composé de silicium liquide dans un équipement de vaporisation (12) comprend l'utilisation d'un composé de silicium (32) ayant un point d'ébullition dans une plage de 99°C à 140°C, le composé de silicium étant un composé choisi dans le groupe constitué par un alcoxysilane, un alkylcyclosiloxane et un alkylsiloxane.

2. Procédé selon la revendication 1, dans lequel l'étape consistant à convertir le liquide en un composé de silicium gazeux comprend le mélange du liquide dans un état de brume avec un gaz vecteur et le chauffage du liquide et du gaz vecteur dans l'équipement de vaporisation (12) pour former le composé de silicium gazeux.

3. Procédé selon la revendication 1, dans lequel l'étape consistant à convertir le liquide (32) en un composé de silicium gazeux comprend le mélange du liquide dans un état de brume avec un gaz vecteur.

4. Procédé selon la revendication 1, dans lequel l'étape consistant à convertir le liquide en un composé de silicium gazeux comprend le mélange du liquide dans un état de brume avec un gaz vecteur et le contrôle d'une quantité du gaz vecteur avec un débitmètre massique pour gaz (24).

5. Procédé selon la revendication 1, comprenant en outre les étapes consistant à :
pressuriser une cuve de stockage de liquide (10) contenant un composé de silicium liquide à l'intérieur de celle-ci ;
déplacer le composé de silicium liquide (32) dans un équipement de vaporisation (12) tout en contrôlant une quantité du composé de silicium liquide déplacé par un débitmètre massique pour liquide (20) ;
mélanger le composé de silicium liquide déplacé avec un gaz vecteur pour générer un composé de silicium gazeux ;
injecter le composé de silicium gazeux dans un four de synthèse (14) ; et
former un verre de silice synthétique en hydrolysant le composé de silicium gazeux dans le four de synthèse (14).

6. Procédé selon la revendication 5, dans lequel un jet du composé de silicium gazeux est dirigé sur une cible (34).

7. Procédé selon la revendication 6, dans lequel un lingot (36) est formé sur la cible (34).

8. Procédé selon la revendication 7, dans lequel la cible (34) est graduellement abaissée au fur et à mesure que le lingot (36) est formé.

9. Procédé selon la revendication 5, dans lequel l'étape consistant à mélanger le composé de silicium gazeux liquide déplacé (32) comprend le mélange du liquide dans un état de brume avec un gaz vecteur et le chauffage du liquide et du gaz vecteur dans l'équipement de vaporisation (12) pour former le composé de silicium gazeux.

10. Procédé selon la revendication 5, dans lequel l'étape consistant à injecter le composé de silicium gazeux dans un four de synthèse (14) comprend le chauffage du composé de silicium gazeux à une température qui est supérieure d'au moins 10°C à un point d'ébullition du composé de silicium.

11. Procédé selon la revendication 5, dans lequel l'étape consistant à déplacer le composé de silicium liquide (32) dans un équipement de vaporisation (12) comprend l'utilisation d'un composé de silicium ayant un point d'ébullition dans une plage de 99°C à 140°C,

12. Procédé selon la revendication 5, dans lequel l'étape consistant à déplacer le composé de silicium liquide (32) dans un équipement de vaporisation (12) comprend l'utilisation en tant que le composé de silicium d'un composé choisi dans le groupe constitué par un alcoxysilane, un alkylcyclosiloxane et un alkylsiloxane.

13. Procédé selon la revendication 5, dans lequel l'étape consistant à mélanger le composé de silicium liquide (32) avec un gaz vecteur pour générer un composé de silicium gazeux comprend le mélange du composé de silicium liquide dans un état de brume avec un gaz vecteur.

14. Procédé selon la revendication 5, dans lequel l'étape consistant à mélanger le composé de silicium liquide (32) avec un gaz vecteur pour générer un composé de silicium gazeux comprend le mélange du composé de silicium liquide dans un état de brume avec un gaz vecteur et le contrôle d'une quantité du gaz vecteur avec un débitmètre pour gaz (24).

## Patentansprüche

1. Verfahren zum Herstellen von synthetischem Quarzglas, aufweisend die Schritte von:
Einbringen einer flüssigen Silizium-Verbindung (32) in eine Verdampfer-Vorrichtung (12), wobei die Menge von der flüssigen Silizium-Verbindung (32) mittels eines Flüssigdurchsatz-Messgeräts (20) geregelt wird,
Überführen der flüssigen Silizium-Verbindung in eine gasförmige Silizium-Verbindung und
Einspeisen der gasförmigen Silizium-Verbindung in einen Synthese-Ofen (14), um synthetisches Quarzglas zu formen, wobei der Schritt des Einspeisens der gasförmigen Silizium-Verbindung in den Synthese-Ofen (14) ein Aufheizen der gasförmigen Silizium-Verbindung auf eine Temperatur aufweist, welche um zumindest 10° C höher ist als der Siedepunkt der Silizium-Verbindung,
**dadurch gekennzeichnet, dass**
der Schritt des Einbringens der flüssigen Silizium-Verbindung in die Verdampfer-Vorrichtung (12) ein Verwenden einer Silizium-Verbindung (32) mit einem Siedepunkt in dem Bereich von 99°C bis 140°C aufweist, wobei die Silizium-Verbindung eine Verbindung ist, welche aus der Gruppe ausgewählt ist, welche aus Alkoxysilanen, Alkylcyklosiloxanen und Alkylsiloxanen besteht.

2. Verfahren nach Anspruch 1, wobei der Schritt des Überführens der Flüssigkeit in die gasförmige Silizium-Verbindung ein Mischen der Flüssigkeit in einem Nebel-Zustand mit einem Trägergas und ein Heizen der Flüssigkeit und des Trägergases in der Verdampfer-Vorrichtung (12) aufweist, um die gasförmige Silizium-Verbindung zu formen.

3. Verfahren nach Anspruch 1, wobei der Schritt des Überführens der Flüssigkeit (32) in die gasförmige Silizium-Verbindung ein Mischen der Flüssigkeit in einem Nebel-Zustand mit einem Trägergas aufweist.

4. Verfahren nach Anspruch 1, wobei der Schritt des Überführens der Flüssigkeit in eine gasförmige Silizium-Verbindung ein Mischen der Flüssigkeit in einem Nebel-Zustand mit einem Trägergas und ein Regeln der Menge von dem Trägergas mittels eines Gasdurchsatz-Messgeräts (24) aufweist.

5. Verfahren nach Anspruch 1, ferner aufweisend die Schritte von:
Beaufschlagen eines Flüssigvorrat-Tanks (10) mit Druck, welcher die flüssige Silizium-Verbindung darin aufweist,
Verdrängen der flüssigen Silizium-Verbindung (32) in die Verdampfer-Vorrichtung (12) hinein, während die Menge von der flüssigen Silizium-Verbindung, welche mittels des Flüssigdurchsatz-Messgeräts (20) verdrängt wird, geregelt wird,
Mischen der verdrängten flüssigen Silizium-Verbindung mit einem Trägergas, um die gasförmige Silizium-Verbindung zu erzeugen,
Einspeisen der gasförmigen Silizium-Verbindung in den Synthese-Ofen (14) und
Formen des synthetischen Quarzglases mittels Hydrolysierens der gasförmigen Silizium-Verbindung in dem Synthese-Ofen (14).

6. Verfahren nach Anspruch 5, wobei ein Strahl von der gasförmigen Silizium-Verbindung auf ein Target (34) gerichtet wird.

7. Verfahren nach Anspruch 6, wobei ein Barren (36) auf dem Target (34) geformt wird.

8. Verfahren nach Anspruch 7, wobei das Target (34) schrittweise abgesenkt wird, während der Barren (36) geformt wird.

9. Verfahren nach Anspruch 5, wobei der Schritt des Mischens der verdrängten flüssigen Silizium-Verbindung (32) ein Mischen der Flüssigkeit in einem Nebel-Zustand mit einem Trägergas und ein Aufheizen der Flüssigkeit und des Trägergases in der Verdampfer-Vorrichtung (12) aufweist, um die gasförmige Silizium-Verbindung zu formen.

10. Verfahren nach Anspruch 5, wobei der Schritt des Einspeisens der gasförmigen Silizium-Verbindung in den Synthese-Ofen (14) ein Aufheizen der gasförmigen Silizium-Verbindung auf eine Temperatur aufweist, welche um zumindest 10°C höher ist als der Siedepunkt von der Silizium-Verbindung.

11. Verfahren nach Anspruch 5, wobei der Schritt des Verdrängens der flüssigen Silizium-Verbindung (32) in die Verdampfer-Vorrichtung (12) hinein ein Verwenden einer Silizium-Verbindung mit einem Siedepunkt in dem Bereich von 99° C bis 140° C aufweist.

12. Verfahren nach Anspruch 5, wobei der Schritt des Verdrängens der flüssigen Silizium-Verbindung (32) in die Verdampfer-Vorrichtung (12) hinein ein Verwenden einer Verbindung als Silizium-Verbindung aufweist, welche aus der Gruppe ausgewählt ist, welche aus Alkoxysilanen, Alkylcyklosiloxanen und Alkylsiloxanen besteht.

13. Verfahren nach Anspruch 5, wobei der Schritt des Mischens der flüssigen Silizium-Verbindung (32) mit einem Trägergas, um eine gasförmige Silizium-Verbindung zu erzeugen, ein Mischen der flüssigen Silizium-Verbindung in einem Nebel-Zustand mit einem Trägergas aufweist.

14. Verfahren nach Anspruch 5, wobei der Schritt des Mischens der flüssigen Silizium-Verbindung (32) mit einem Trägergas, um eine gasförmige Silizium-Verbindung zu erzeugen, ein Mischen der flüssigen Silizium-Verbindung in einem Nebel-Zustand mit einem Trägergas und ein Regeln der Menge von dem Trägergas mittels eines Gasdurchsatz-Messgeräts (24) aufweist.
